# EUROPÄISCHE PATENTANMELDUNG

(11) **EP 3 798 969 A1**
(43) Veröffentlichungstag der Anmeldung: **31.03.2021**
(21) Anmeldenummer: 19200256.6
(22) Anmeldetag: 27.09.2019
(51) Int. Cl.: G06T 3/40, G06T 7/73, G06T 7/00

(54) **VERFAHREN ZUR VERARBEITUNG VON TIEFENBILDERN, BILDVERARBEITUNGSVORRICHTUNG UND TIEFENKAMERA**

(71) Anmelder: Stemmer Imaging AG, 82178 Puchheim (DE)
(72) Erfinder: Schwager, Stefan, 82256 Fürstenfeldbruck (DE)
(74) Vertreter: Isarpatent

(57) **Zusammenfassung**

Die vorliegende Erfindung betrifft eine dynamische Auflösungsanpassung von Tiefenbildern. Hierzu ist es vorgesehen, Bilddaten mit Tiefeninformationen in weitere Bilddaten zu überführen, bei denen unter Verwendung der Tiefeninformationen Größenunterschiede aufgrund perspektivischer Abbildungseigenschaften kompensiert werden. Hierdurch können Bilddaten bereitgestellt werden, bei welchen entfernungsabhängige Größenunterschiede eliminiert worden sind. Dies ermöglicht eine effiziente Weiterverarbeitung der aufbereiteten Bilddaten, beispielsweise für eine Objekterkennung.

## Beschreibung

Die vorliegende Erfindung betrifft ein Verfahren zur Verarbeitung von Tiefenbildern, eine Bildverarbeitungsvorrichtung sowie eine Tiefenkamera. Insbesondere betrifft die vorliegende Erfindung eine Bildverarbeitung für eine Objekterkennung.

### Stand der Technik

Für eine optische Erfassung einer Umgebung sind zahlreiche optische Sensoren, insbesondere Bildsensoren, wie zum Beispiel Kameras, bekannt. Neben einer rein zweidimensionalen Bilderfassung ist es darüber hinaus auch möglich, für einzelne Bildbereiche, bis hin zu einzelnen Pixeln jeweils eine zusätzliche Tiefeninformation zu erfassen. Diese Tiefeninformation kann beispielsweise einen Abstand zwischen dem Bildsensor und einem Objekt spezifizieren. Auf diese Weise kann neben der Farb- und/oder Helligkeitsinformation eines Pixels auch eine laterale Positionsinformation oder eine Tiefeninformation bereitgestellt werden. Dies kann beispielsweise mittels einer sogenannten Tiefenkamera erfolgen.

Aufgrund des perspektivischen Abbildungsprinzips erscheinen Objekte in einem Kamerabild umso kleiner, je weiter sie von der Kamera entfernt sind. Analog erscheinen die Objekte umso größer, je näher sie an der Kamera sind. Folglich führt ein Objekt, welches sich näher an dem Bildsensor befindet, zu mehr Pixeln in einem Kamerabild, als ein gleichgroßes Objekt, welches sich weiter entfernt von dem Bildsensor befindet. Mit anderen Worten, ein Objekt bestimmter Größe wird abhängig von seinem Abstand zu einem Bildsensor in den Bilddaten unterschiedlich groß und mit einer unterschiedlichen Anzahl von Pixeln wiedergegeben.

Für eine automatisierte Objekterkennung müssen daher entweder das Bild des Objekts oder die Referenzdaten für eine Objekterkennung mehrfach unterschiedlich skaliert werden, um Objekte in unterschiedlichen Abständen zum Bildsensor zuverlässig detektieren zu können.

Vor diesem Hintergrund ist es eine Aufgabe der vorliegenden Erfindung, eine verbesserte Bildverarbeitung bereitzustellen, welche eine effiziente Bildverarbeitung von Bilddaten von Objekten mit variablen Abstand zu einem Bildsensor aufweisen.

### Offenbarung der Erfindung

Die vorliegende Erfindung schafft ein Verfahren zur Auswertung von Tiefenbildern, eine Bildverarbeitungsvorrichtung sowie eine Tiefenkamera mit den Merkmalen der unabhängigen Patentansprüche. Weitere vorteilhafte Ausführungsformen sind Gegenstand der abhängigen Patentansprüche.

### Gemäß einem ersten Aspekt ist vorgesehen:

Ein Verfahren zur Auswertung von Tiefenbildern. Das Verfahren umfasst einen Schritt zum Bereitstellen von Bilddaten. Dabei ist jedem Pixel der bereitgestellten Bilddaten eine Tiefeninformation zugeordnet. Die Tiefeninformation kann beispielsweise eine Information über einen Abstand zwischen einem Objekt und einem Bildsensor, der die Bilddaten erfasst hat, spezifizieren. Das Verfahren umfasst weiterhin einen Schritt zum Erzeugen weiterer Bilddaten. Die weiteren Bilddaten können durch Abbilden der bereitgestellten Bilddaten in eine vorbestimmte virtuelle Ebene erzeugt werden. Bei der vorbestimmten virtuellen Ebene kann es sich beispielsweise um eine Ebene mit einem vorbestimmten Abstand zu dem Bildsensor handeln, der die Bilddaten erfasst hat. Insbesondere kann die vorbestimmte virtuelle Ebene parallel zu dem Sensor verlaufen. Das Abbilden der Bilddaten in die vorbestimmte virtuelle Ebene erfolgt unter Verwendung der jeweiligen Tiefeninformation der einzelnen Pixel.

### Gemäß einem zweiten Aspekt ist vorgesehen:

Eine Bildverarbeitungsvorrichtung mit einem Bildsensor, einem Tiefensensor sowie einer Verarbeitungseinrichtung. Der Bildsensor ist dazu ausgelegt, Bilddaten von einem Objekt zu erfassen. Die Bilddaten können insbesondere Pixel mit Farbinformation und/oder Helligkeitsinformationen umfassen. Der Tiefensensor ist dazu ausgelegt, für jeden Pixel der Bilddaten korrespondierende Tiefeninformationen bereitzustellen. Die Verarbeitungseinrichtung ist dazu ausgelegt, weitere Bilddaten durch Abbilden der bereitgestellten Bilddaten in eine vorbestimmte virtuelle Ebene zu erzeugen. Das Abbilden der Bilddaten erfolgt insbesondere unter Verwendung der Tiefeninformation für die einzelnen Pixel.

### Gemäß noch einem dritten Aspekt ist vorgesehen:

Eine Tiefenkamera mit einer Bildverarbeitungsvorrichtung gemäß dem zweiten Aspekt.

Der vorliegenden Erfindung liegt die Erkenntnis zugrunde, dass gemäß dem perspektivischen Abbildungsprinzip Objekte einer bestimmten Größe im Sensorbild eines Bildsensors, wie zum Beispiel einer Kamera, je nach Abstand des Objekts von dem Bildsensor unterschiedlich groß erscheinen. Entsprechend variiert die Anzahl von Pixeln in den Bilddaten, die sich auf ein bestimmtes Objekt beziehen, in Abhängigkeit von dem Abstand des Objekts zum Bildsensor. Für eine Auswertung der Bilddaten, insbesondere für eine Objekterkennung, müssen daher die Bilddaten und/oder die Referenzdaten mehrfach unterschiedlich skaliert werden, um der variablen Größe eines Objekts in den Bilddaten Rechnung zu tragen.

Es ist daher eine Idee der vorliegenden Erfindung, eine Auswertung von Bilddaten, insbesondere Bilddaten mit Tiefeninformationen, vorzusehen, welche eine effiziente Auswertung der Bilddaten für eine Objekterkennung ermöglicht. Insbesondere ist es eine Idee der vorliegenden Erfindung, die Bilddaten so aufzubereiten, dass eine entfernungsabhängige Größenvariation kompensiert wird.

Hierzu ist es vorgesehen, Bilddaten, wie beispielsweise ein Sensorbild von einer Kamera, unter Berücksichtigung der Tiefeninformationen für die einzelnen Pixel der Bilddaten auf eine virtuelle Ebene abzubilden. Dabei werden die Größenverhältnisse der einzelnen Pixel in Abhängigkeit der jeweiligen Tiefeninformationen für die einzelnen Pixel dynamisch angepasst. Auf diese Weise können Bilddaten generiert werden, in denen die Größenverhältnisse der Pixel und somit auch der durch die Pixel dargestellten Objekte alle einem einheitlichen Abstand zu dem Bildsensor entsprechen. Auf diese Weise können Variationen in der Größe bzw. der Anzahl von Pixeln aufgrund unterschiedlicher Abstände zwischen Objekt und Bildsensor kompensiert werden.

Die Bilddaten, insbesondere die Bilddaten von einem Objekt, können beispielsweise mittels eines beliebigen Bildsensors erfasst werden. Neben dem Bildsensor kann darüber hinaus auch noch eine geeignete Optik vorgesehen sein, welche den abzubildenden Bereich auf den Bildsensor fokussiert.

Darüber hinaus können die Tiefeninformationen für die einzelnen Pixel der erfassten Bilddaten mittels eines beliebigen geeigneten Systems bereitgestellt werden. Beispielsweise können die Tiefeninformationen mittels Triangulation bestimmt werden. Hierzu kann beispielsweise eine Stereokamera oder ähnliches verwendet werden. Darüber hinaus sind auch beliebige andere Verfahren zur Entfernungsbestimmung möglich.

Die Bilddaten und die Tiefeninformationen können beispielsweise mittels einer Tiefenkamera oder ähnlichem bereitgestellt werden.

Die Weiterverarbeitung der Bilddaten und der Tiefeninformation sowie gegebenenfalls die Objekterkennung können zum Beispiel mittels einer geeigneten Datenverarbeitungseinrichtung erfolgen. Die Datenverarbeitungseinrichtung kann zum Beispiel einen Prozessor und einen Speicher umfassen. In dem Speicher können geeignete Anweisungen abgespeichert sein, die den Prozessor dazu veranlassen, das erfindungsgemäße Verfahren auszuführen. Hierzu kann beispielsweise ein Betriebssystem, wie zum Beispiel Windows oder Linux, ausgeführt werden, welches die in dem Speicher abgespeicherten Anweisungen lädt und ausführt. Darüber hinaus sind selbstverständlich auch beliebige andere Datenverarbeitungseinrichtungen möglich, welche dazu geeignet sind, das erfindungsgemäße Verfahren auszuführen.

Gemäß einer Ausführungsform umfasst das Abbilden der Bilddaten in die vorbestimmte virtuelle Ebene ein Anpassen der Pixelgröße der einzelnen Pixel in Abhängigkeit von der zu den jeweiligen Pixeln korrespondierenden Tiefeninformation. Beispielsweise kann ein Bildbereich in den weiteren Bilddaten, auf den ein Pixel abgebildet wird, in Abhängigkeit von der Tiefeninformation vergrößert oder verkleinert werden. Auf diese Weise kann die Pixelgröße bzw. der Bildbereich, der zu einem Pixel in den Bilddaten korrespondiert, derart angepasst werden, dass er einer perspektivischen Abbildung eines Objekts entspricht, wenn sich das Objekt in einem vorgegebenen virtuellen Abstand befindet. Insbesondere ist dieser virtuelle Abstand für die Bilddaten aller Pixel in den weiteren Bilddaten gleich.

Gemäß einer Ausführungsform kann die Auflösung der Bilddaten auf eine vorbestimmte feste Auflösung angepasst werden. Insbesondere kann diese vorbestimmte Auflösung, auf der die weiteren Bilddaten berechnet werden, einer Auflösung entsprechend, die für eine Weiterverarbeitung, insbesondere eine Objekterkennung, geeignet ist. Auf diese Weise können die weiteren Bilddaten direkt für die Weiterverarbeitung verwendet werden, ohne dass eine weitere zusätzliche Skalierung der Bilddaten oder der Referenzdaten erforderlich ist.

Gemäß einer Ausführungsform ist die vorbestimmte Auflösung in den weiteren Bilddaten für den gesamten Bildbereich konstant. Auf diese Weise ist eine besonders einfache und effiziente Weiterverarbeitung der weiteren Bilddaten mit einer einheitlichen Auflösung und Größe der abgebildeten Objekte in den Bilddaten möglich.

Gemäß einer Ausführungsform werden die weiteren Bilddaten mit einer Gruppe von Referenzbildern verglichen. Da die weiteren Bilddaten die Objekte in einer einheitlichen Größe repräsentieren, die einem vorbestimmten Abstand entspricht, und da die Bilddaten gegebenenfalls auch eine einheitliche Auflösung aufweisen, kann ein besonders einfacher Vergleich der Bilddaten mit Referenzbildern erfolgen. Insbesondere müssen die Referenzbilder nicht mehrfach unterschiedlich skaliert werden, um gegebenenfalls unterschiedlichen Entfernungen zwischen Objekt und Bildsensor Rechnung zu tragen. Insbesondere kann die Auflösung der Referenzbilder der Auflösung der weiteren Bilddaten entsprechen.

Gemäß einer Ausführungsform erfolgt der Vergleich der weiteren Bilddaten mit den Referenzbildern pixelbasiert. Entsprechend können die weiteren Bilddaten mit den Referenzbildern pixelweise verglichen werden. Aufgrund der angepassten Pixelgröße, die den Objekten in einem Referenzabstand entspricht, und einer einheitlichen Auflösung kann ein solcher pixelbasierter Vergleich besonders effizient und sicher erfolgen.

Gemäß einer Ausführungsform weisen auch die Referenzbilder eine vorgegebene Auflösung auf. Entspricht die Auflösung der Referenzbilder der Auflösung, in der auch die weiteren Bilddaten bereitgestellt werden, so ist eine besonders einfache und effiziente Weiterverarbeitung der Bilddaten möglich.

Gemäß einer Ausführungsform weisen die Referenzbilder Bilddaten von Referenzobjekten auf, die Referenzobjekten in der vorbestimmten virtuellen Ebene entsprechen. Durch den Vergleich der Bilddaten der Referenzobjekte, mit den angepassten weiteren Bilddaten kann eine besonders einfache und somit auf effiziente Objekterkennung ausgeführt werden.

Die erfindungsgemäße Verarbeitung und Aufbereitung der Bilddaten kann beispielsweise auch unmittelbar durch ein in der Tiefenkamera integriere Bildverarbeitung erfolgen.

Auf diese Weise können bereits aufbereitete Bilddaten durch die Tiefenkamera bereitgestellt werden, wobei in den aufbereiteten Bilddaten die Auflösung bzw. die Pixelgröße von Objekten unabhängig vom Abstand der Objekte zur Tiefenkamera sind. Dies ermöglicht eine besonders einfache und rasche Weiterverarbeitung derartiger Bilddaten.

Insbesondere kann gegebenenfalls auch direkt eine Objekterkennung mit in die Tiefenkamera integriert sein.

Die Tiefenkamera mit einer solchen Bildverarbeitung kann beispielsweise auf einer beweglichen Basis angeordnet sein. Eine solche bewegliche Basis kann beispielsweise ein bewegliches Element einer Automatisierungsanlage, wie zum Beispiel einem Industrieroboter, umfassen. Hierdurch kann auch bei variablem Abstand der beweglichen Basis mit der Tiefenkamera zu einem Objekt stets eine effiziente und rasche Objekterkennung oder Weiterverarbeitung der Bilddaten erfolgen.

Mit der vorliegenden Erfindung ist es somit möglich, Bilddaten in einer Umgebung zu erfassen und die so erfassten Bilddaten aufzubereiten, um eine entfernungsunabhängige Größendarstellung von Objekten in den Bilddaten bereitzustellen. Hierdurch können perspektivische Größenunterschiede aufgrund unterschiedlicher Abstände von Objekten zu einem Bildsensor kompensiert werden. Somit kann eine Weiterverarbeitung derart aufbereiteter Bilddaten, beispielsweise für eine Objekterkennung oder ähnliches, besonders effizient ausgeführt werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1:: eine schematische Darstellung zur Veranschaulichung des perspektivischen Abbildungsprinzips;
- Figur 2:: eine schematische Darstellung zur Veranschaulichung des Verfahrens zur Auswertung von Tiefenbildern gemäß einer Ausführungsform;
- Figur 3:: eine schematische Darstellung eines Blockschaubilds einer Bildverarbeitungsvorrichtung gemäß einer Ausführungsform; und
- Figur 4:: ein Ablaufdiagramm, wie es einem Verfahren zur Auswertung von Tiefenbildern gemäß einer Ausführungsform zugrunde liegt.

### Beschreibung von Ausführungsformen

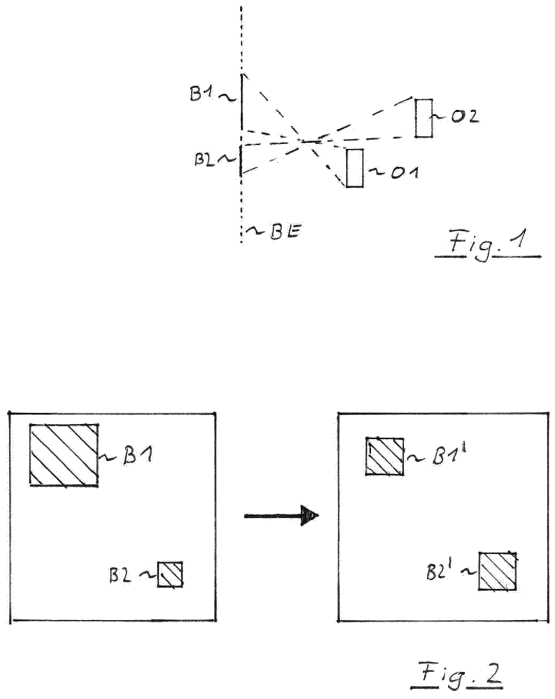

Figur 1 zeigt eine schematische Darstellung zur Veranschaulichung des perspektivischen Abbildungsprinzips. In dem hier dargestellten Beispiel werden zwei Objekte O1 und O2 auf eine Bildebene BE abgebildet. Die beiden Objekte O1 und O2 sollen hierbei zur Veranschaulichung zumindest annähernd gleiche Größen aufweisen. Der Abstand des ersten Objekts O1 von der Bildebene BE ist geringer, als der Abstand des zweiten Objekts O2 von der Bildebene BE. Daher erscheint die Abbildung B1 des ersten Objekts O1 größer, als die Abbildung B2 des zweiten Objekts O2. In einem zweidimensionalen Bild wird daher die Abbildung des Objekts O1 mehr Pixel umfassen, als die Abbildung des zweiten Objekts O2.

Figur 2 veranschaulicht das Grundprinzip des Verfahrens zur Auswertung von Tiefenbildern gemäß einer Ausführungsform. Der linke Teil der Figur 2 stellt exemplarisch eine Aufnahme von Bilddaten mit zwei Objekten O1 und O2 dar, wobei die beiden Objekte B1, O2 durch die Bildbereiche B1 und B2 dargestellt werden. Wie zuvor im Zusammenhang mit Figur 1 bereits beschrieben, kann es sich bei den beiden Objekten O1 und O2 beispielsweise um zumindest annähernd gleiche Objekte handeln, wobei das erste Objekt O1 sich näher am Bildsensor befindet, als das zweite Objekt O2. Entsprechend ist das erste Objekt O1 größer dargestellt, als das zweite Objekt O2. Folglich umfasst der Bildbereich B1 des ersten Objekts O1 mehrere Pixel als der Bildbereich B2 des zweiten Objekts O2. Die Darstellung von lediglich zwei Objekten O1 und O2 dient dabei lediglich der Erläuterung und stellt keine Einschränkung der vorliegenden Erfindung auf nur zwei Objekte dar. Grundsätzlich können in die Bilddaten auch nur Abbildungen von einem oder mehr als zwei Objekten enthalten sein. Ebenfalls können die Objekte O1, O2 beliebige Größen aufweisen. Der Bezug auf Objekte mit gleicher Größe wurde hier lediglich zur besseren Veranschaulichung des Grundprinzips gewählt und stellt keine Einschränkung in der Erfindung dar.

Für die erfindungsgemäße Auswertung der Bilddaten werden unter Verwendung von Tiefeninformationen für die einzelnen Pixel in den Bilddaten, die ursprünglichen Bilddaten in weitere Bilddaten überführt. Die weiteren Bilddaten entsprechen dabei einer Darstellung, bei der die ursprünglichen Bilddaten derart abgebildet werden, dass sich eine Darstellung ergibt, bei der alle abgebildeten Objekte sich in einer virtuellen Ebene befinden, wobei die virtuelle Ebene einen konstanten Abstand zum Bildsensor hat. Hierzu kann die Größe der einzelnen Pixel unter Berücksichtigung der korrespondierenden Tiefeninformation für die jeweiligen Pixel angepasst werden. So können beispielsweise Pixel, deren Tiefeninformation einem Abstand entspricht, der weiter als die virtuelle Ebene von dem Bildsensor entfernt ist, vergrößert werden. Entsprechend können Pixel, deren Tiefeninformation einem Abstand zum Bildsensor entspricht, der kleiner ist als der Abstand der virtuellen Bildebene verkleinert werden. Darüber hinaus können auch die Positionen der einzelnen Pixel entsprechend angepasst werden.

Wie im rechten Teil von Figur 2 zu erkennen ist, sind nach der erfindungsgemäßen Abbildung die Bildbereiche B1' und B2' der einzelnen Objekte O1 und O2 in Größenverhältnissen dargestellt, die den tatsächlichen Größenrelationen der Objekte O1 und O2 entsprechen. In dem hier gewählten Beispiel sind daher die Bildbereiche B1' und B2' gleich groß, da auch die zugrunde liegenden Objekte O1 und O2 gleich groß gewählt wurden.

Die Tiefeninformation für die einzelnen Pixel können hierbei beliebige Informationen bezüglich des Abstands eines Objekts zur Bildebene umfassen. Beispielsweise können die Tiefeninformationen laterale Positionsinformationen oder Entfernungen eines Objekts zur Kamera umfassen. Insbesondere kann für jeden Pixel der Bildinformationen eine separate Tiefeninformation bereitgestellt werden.

Die Tiefeninformationen können mittels beliebiger geeigneter Sensoren erfasst werden. Beispielsweise können die Tiefeninformationen zusammen mit den erfassten Bilddaten von einer Tiefenkamera oder ähnlichem bereitgestellt werden.

Neben der Variation der Pixelgröße in Abhängigkeit der Tiefeninformation kann darüber hinaus auch die Auflösung für die weiteren Bilddaten entsprechend angepasst werden. Beispielsweise kann die Auflösung der weiteren Bilddaten auf eine vorgegebene Soll-Auflösung angepasst werden. Hierzu sind beliebige geeignete Verfahren, beispielsweise Interpolation oder ähnliches möglich. Insbesondere kann die Auflösung der weiteren Bilddaten für den Gesamt-Bildbereich konstant sein.

Die so generierten weiteren Bilddaten repräsentieren somit eine entfernungsunabhängige Darstellung der Objekte im Abbildungsbereich. Dies ermöglicht eine besonders effiziente und ressourcenschonende Weiterverarbeitung, da für die Weiterverarbeitung, wie beispielsweise eine Objekterkennung o. ä., keine entfernungsabhängige Größenvariation berücksichtigt werden muss.

Beispielsweise können die aufbereiteten weiteren Bilddaten für eine Objekterkennung oder ähnliches verwendet werden. Hierzu können die aufbereiteten Bilddaten mit entsprechenden Referenzbilddaten verglichen werden. Die Referenzbilddaten können dabei auf beliebige geeignete Weise generiert werden. Beispielsweise können die Referenzbilddaten zuvor erfasste Bilddaten von realen Objekten umfassen. Darüber hinaus können die Referenzbilddaten auch basierend auf zwei- oder dreidimensionalen Modellen berechnet werden. Die Referenzbilddaten können insbesondere mit einer geeigneten festen Auflösung bereitgestellt werden. Die Auflösung der Referenzbilddaten kann dabei der Auflösung der aufbereiteten weiteren Bilddaten entsprechen. Somit können die weiteren Bilddaten direkt mit den Referenzbilddaten verglichen werden, ohne dass hierbei zusätzliche weitere Bildtransformationen oder ähnliches erforderlich sind. Da die aufbereiteten weiteren Bilddaten die Objekte in einer festen Referenzebene repräsentieren, ist auch keine weitere Skalierung der Größenverhältnisse der weiteren Bilddaten und/oder der Referenzbilddaten erforderlich. Vielmehr können die aufbereiteten weiteren Bilddaten direkt mit den Referenzbilddaten verglichen werden.

Beispielsweise kann der Vergleich zwischen den Referenzbilddaten und den aufbereiteten weiteren Bilddaten durch einen pixelbasierten Vergleich von Bildausschnitten oder ähnlichem erfolgen. Beispielsweise kann ein durch Referenzbilddaten repräsentiertes Bildelement über den weiteren Bilddaten verschoben und/oder rotiert werden, um mögliche Übereinstimmungen zwischen den aufbereiteten weiteren Bilddaten und den Referenzbilddaten zu detektieren. Darüber hinaus sind selbstverständlich auch beliebige andere Verfahren zum Vergleich der Referenzbilddaten mit den aufbereiteten weiteren Bilddaten möglich.

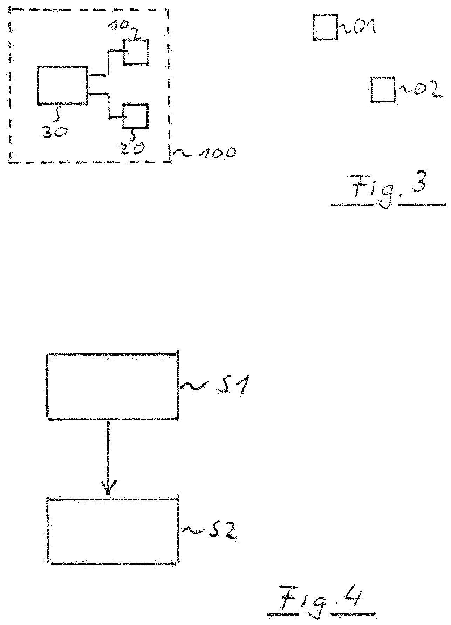

Figur 3 zeigt eine schematische Darstellung eines Blockschaubilds, wie es einer Bildverarbeitungsvorrichtung 100 gemäß einer Ausführungsform zugrunde liegt. Die Bildverarbeitungsvorrichtung 100 kann insbesondere mindestens einen Bildsensor 10 und einen Tiefensensor 20 umfassen. Der Bildsensor 10 erfasst optisch einen Umgebungsbereich und stellt Bilddaten des erfassten Umgebungsbereiches bereit. Beispielsweise kann es sich bei dem Bildsensor 10 um eine Kamera handeln, welche zweidimensionale Bilddaten bereitstellt. Zusätzlich kann der Tiefensensor 20 laterale Positionsinformationen oder eine Tiefeninformation, das heißt eine Entfernung eines Objekts zu dem Tiefensensor 20 bzw. dem Bildsensor 10 ermitteln. Bei dem Bildsensor 20 kann es sich um einen beliebigen geeigneten Tiefensensor handeln, der die entsprechenden Informationen bereitstellen kann. Beispielsweise können die Tiefeninformationen mittels Triangulation oder ähnlichem erfasst werden. Die Tiefeninformationen können zum Beispiel mittels Stereoskopie oder ähnlichem bestimmt werden.

Die von dem Bildsensor 10 erfassten Bilddaten und die korrespondierenden Tiefeninformationen werden daraufhin einer Verarbeitungseinrichtung 30 bereitgestellt. Die Verarbeitungseinrichtung 30 führt daraufhin die zuvor bereits beschriebene Abbildung der Bilddaten zu den angepasste weiteren Bilddaten aus.

Beispielsweise kann hierzu eine lineare Abbildungsfunktion erzeugt werden, die die erfassten Bilddaten und die weiteren Bilddaten abbildet. Dabei kann für jedes Pixel der ursprünglichen Bilddaten eine entsprechende korrespondierende Position in den weiteren Bilddaten bestimmt werden. Weiterhin kann unter Verwendung der zu dem jeweiligen Pixel korrespondierenden Tiefeninformation eine entsprechende Ausdehnung in den weiteren Bilddaten ermittelt werden. Auf diese Weise können sämtliche Pixel (Bildpunkte) der ursprünglichen Bilddaten in die weiteren Bilddaten überführt werden. Darüber hinaus können die weiteren Bilddaten in eine gewünschte Soll-Auflösung überführt werden. Hierzu kann beispielsweise eine Interpolation oder ein beliebiges anderes Verfahren zur Anpassung der Auflösung, insbesondere einer konstanten Auflösung über den gesamten Bereich der weiteren Bilddaten, ausgeführt werden.

Die Bildverarbeitungsvorrichtung 100 kann beispielsweise in einem Kamerasystem, insbesondere einer Tiefenkamera oder ähnlichem integriert werden. Entsprechend kann die Tiefenkamera die bereits aufbereiteten weiteren Bilddaten ausgeben.

Wie zuvor bereits beschrieben, können die Bilddaten beispielsweise für eine Objekterkennung oder ähnliches verwendet werden. Aufgrund der Kompensationen der perspektivischen Größenverschiebungen sind dabei die Größenverhältnisse der Objekte entfernungsunabhängig. Darüber hinaus können durch die Anpassung der Auflösung die Bilddaten auch derart bereitgestellt werden, dass sie für einen direkten Vergleich mit Referenzbilddaten herangezogen werden können. Eine weitere Skalierung oder Transformation ist dabei nicht erforderlich.

Die Bildverarbeitungsvorrichtung, insbesondere eine Tiefenkamera mit integrierter Bildverarbeitungsvorrichtung 100 kann beispielsweise auf einer beweglichen Basis, wie zum Beispiel einem Roboterarm eines Automatisierungssystems oder ähnlichem, angeordnet sein. Auf diese Weise ist es möglich, dass selbst wenn sich die Basis in Bezug auf ein oder mehrere Objekte bewegt, diese Objekte stets mit gleichbleibender Bildgröße in den Bilddaten repräsentiert sind. Dies ermöglicht eine besonders effiziente und ressourcenschonende Weiterverarbeitung. Somit können insbesondere bei Automatisierungssystemen mit begrenzter Rechenleistung zuverlässige Objekterkennungsverfahren und weitere Steuerungsalgorithmen implementiert werden.

Figur 4 zeigt eine schematische Darstellung eines Ablaufdiagramms, wie es einem Verfahren zur Auswertung von Tiefenbildern gemäß einer Ausführungsform zugrunde liegt. Das Verfahren kann beliebige Schritte umfassen, wie sie zuvor bereits beschrieben worden sind. Darüber hinaus können die zuvor beschriebenen Vorrichtungen auch beliebige Verfahrensschritte umfassen, wie sie nachfolgend noch näher erläutert werden.

In einem Schritt S1 werden Bilddaten bereitgestellt. Insbesondere werden Bilddaten bereitgestellt, bei denen jedem Pixel der Bilddaten eine Tiefeninformation zugeordnet ist. Bei der Tiefeninformation kann es sich, wie zuvor bereits erläutert, um eine laterale Positionsinformation oder eine Entfernung eines Objekts von der Kamera handeln.

In Schritt S2 werden weitere Bilddaten erzeugt. Die weiteren Bilddaten werden insbesondere durch Abbilden der bereitgestellten Bilddaten in eine vorbestimmte virtuelle Ebene erzeugt. Bei der vorbestimmten virtuellen Ebene kann es sich insbesondere um eine Ebene handeln, die einen konstanten (virtuellen) Abstand zu dem Bildsensor hat, der die Bilddaten bereitgestellt hat. Das Abbilden der Bilddaten in die weiteren Bilddaten erfolgt dabei unter Verwendung der Tiefeninformationen für die einzelnen Pixel. Hierbei können die Größen der einzelnen Pixel entsprechend der Tiefeninformation angepasst werden, so dass entfernungsabhängige Größenänderungen unter Verwendung der Tiefeninformation kompensiert werden können.

Die weiteren Bilddaten können, wie zuvor bereits beschrieben, auf eine vorbestimmte Auflösung angepasst werden.

Mit den bereitgestellten weiteren Bilddaten ist somit eine effiziente Objekterkennung möglich. Beispielsweise können die aufbereiteten weiteren Bilddaten mit Referenzbilddaten verglichen werden. Der Vergleich kann beispielsweise auf Basis einzelner Pixel erfolgen.

Zusammenfassend betrifft die vorliegende Erfindung eine dynamische Auflösungsanpassung von Tiefenbildern. Hierzu ist es vorgesehen, Bilddaten mit Tiefeninformationen in weitere Bilddaten zu überführen, bei denen unter Verwendung der Tiefeninformationen Größenunterschiede aufgrund perspektivischer Abbildungseigenschaften kompensiert werden. Hierdurch können Bilddaten bereitgestellt werden, bei welchen entfernungsabhängige Größenunterschiede eliminiert worden sind. Dies ermöglicht eine effiziente Weiterverarbeitung der aufbereiteten Bilddaten, beispielsweise für eine Objekterkennung.

## Patentansprüche

1. Verfahren zur Auswertung von Tiefenbildern, mit den Schritten:
Bereitstellen (S1) von Bilddaten, wobei jedem Pixel der Bilddaten eine Tiefeninformation zugeordnet ist; und
Erzeugen (S2) weiterer Bilddaten durch Abbilden der bereitgestellten Bilddaten in eine vorbestimmte virtuelle Ebene,
wobei das Abbilden der Bilddaten die einzelnen Pixel unter Verwendung der jeweiligen Tiefeninformation erfolgt.

2. Verfahren nach Anspruch 1, wobei Abbilden der Bilddaten ein Anpassen einer Pixelgröße in Abhängigkeit der Tiefeninformation umfasst.

3. Verfahren nach Anspruch 1 oder 2, mit einem Schritt zum Anpassen der Auflösung der weiteren Bilddaten auf eine vorbestimmte Auflösung.

4. Verfahren nach Anspruch 3, wobei die vorbestimmte Auflösung für den gesamten Bildbereich konstant ist.

5. Verfahren nach einem der Ansprüche 1 bis 4, mit einem Schritt zum Vergleichen der weiteren Bilddaten mit eine Gruppe von Referenzbildern.

6. Verfahren nach Anspruch 5, wobei das Vergleichen der weiteren Bilddaten mit den Referenzbildern durch ein Vergleichen von Pixeln erfolgt.

7. Verfahren nach Anspruch 5 oder 6, wobei die Referenzbilder eine vorgegebene Auflösung aufweisen.

8. Verfahren nach einem der Ansprüche 5 bis 7, wobei Referenzbilder Bilddaten von Referenzobjekten in der vorbestimmten virtuellen Ebene umfassen.

9. Bildverarbeitungsvorrichtung (100), mit:
einen Bildsensor (10), der dazu ausgelegt ist, Bilddaten von einem Objekt zu erfassen;
einem Tiefensensor (20), der dazu ausgelegt ist, Tiefeninformationen für die durch den Bildsensor erfassten Bilddaten bereitzustellen; und
einer Verarbeitungseinrichtung (30), die dazu ausgelegt ist, weiterer Bilddaten durch Abbilden der bereitgestellten Bilddaten in eine vorbestimmte virtuelle Ebene zu erzeugen, wobei das Abbilden der Bilddaten die einzelnen Pixel unter Verwendung der jeweiligen Tiefeninformation erfolgt.

10. Bildverarbeitungsvorrichtung (100) nach Anspruch 9, wobei die Verarbeitungseinrichtung (30) dazu ausgelegt ist, eine Auflösung der weiteren Bilddaten auf eine vorbestimmte, konstante Auflösung anzupassen.

11. Bildbearbeitungsvorrichtung (100) nach Anspruch 9 oder 10, wobei die Verarbeitungseinrichtung (30) dazu ausgelegt ist, die weiteren Bilddaten mit eine Gruppe von Referenzbildern zu vergleichen.

12. Bildverarbeitungsvorrichtung (100) nach Anspruch 11, wobei die Verarbeitungseinrichtung (30) dazu ausgelegt ist, das von dem Bildsensor (10) erfasste Objekt basierend auf dem Vergleich mit den Referenzbilddaten zu klassifizieren.

13. Tiefenkamera, mit einer Bildbearbeitungsvorrichtung (100) nach einem der Ansprüche 9 bis 12.

14. Tiefenkamera nach Anspruch 13, wobei die Tiefenkamera auf einer beweglichen Basis angeordnet ist.
